# EUROPÄISCHE PATENTSCHRIFT

(11) **EP 0 529 431 B1**
(45) Veröffentlichungstag und Bekanntmachung des Hinweises auf die Patenterteilung: **27.11.1996**
(21) Anmeldenummer: 92113832.7
(22) Anmeldetag: 13.08.1992
(51) Int. Cl.: G21C 19/32, G21C 3/335

(54) **Becken und Aufnahmevorrichtung für langgestreckte Kernreaktorbrennelemente**
Pool and device for receiving elongated nuclear reactor fuel elements
Bassin et dispositif d'entreposage pour assemblages combustibles de réacteurs nucléaires de forme allongée

(30) Priorität: 27.08.1991 DE 4128324
(43) Veröffentlichungstag der Anmeldung: 03.03.1993
(73) Patentinhaber: SIEMENS AKTIENGESELLSCHAFT, 80333 München (DE)
(72) Erfinder: Faber, Heinrich, Dipl.-Ing., W-8521 Poxdorf (DE)

(56) Entgegenhaltungen:
- EP-A- 0 039 785
- EP-A- 0 043 096
- FR-A- 2 360 963
- FR-A- 2 434 463
- LU-A- 78 579

## Beschreibung

Die Erfindung betrifft ein Becken für langgestreckte Kernreaktorbrennelemente entsprechend dem Oberbegriff des Patentanspruches 1.

Ein derartiges Becken ist aus der deutschen Offenlegungsschrift 26 35 501 bekannt. Die Aufnahmevorrichtung für das Kernreaktorbrennelement ist in diesem Becken ein langgestreckter Korb, der an beiden Enden geöffnet und verschlossen werden kann. Das Kernreaktorbrennelement wird bei verschlossenem Unterende des langgestreckten, vertikal stehenden Korbs am offenen Oberende in Richtung der Längsachse dieses Kernreaktorbrennelements in den Korb hineingeschoben. Anschließend wird der Korb am Oberende verschlossen. Hierauf wird der Korb um eine zu seiner Längsrichtung rechtwinklige Drehachse um 180° geschwenkt, so daß sein ursprüngliches Unterenede zum Oberende und sein ursprüngliches Oberende zum Unterende wird. Nach Öffnen des ursprünglichen Unterendes und jetzigen Oberendes des Korbs kann das langgestreckte Brennelement, welches im Korb ebenfalls um die auch zu seiner Längsrichtung rechtwinklige Drehachse gedreht wurde, wieder in Richtung der Längsachse dieses Kernreaktorbrennelements aus dem Korb herausgezogen und beispielsweise einer weiteren Bearbeitung zugeführt werden.

Ein langgestrecktes Kernreaktorbrennelement ist üblicherweise etwa 4 m lang. Mindestens die gleiche Länge muß also auch der Korb haben. Außerdem muß sich jederzeit über einem in dem Becken mit vertikaler Längsrichtung stehenden Kernreaktorbrennelement eine Sicherheitswasserhöhe befinden. Dies bedeutet, daß der Korb zum Schwenken eines Kernreaktorbrennelements im bekannten Becken eine Wasserhöhe von etwa 12 m erfordert.

Der Erfindung liegt die Aufgabe zugrunde, diese zum Schwenken erforderliche Wasserhöhe gering zu halten.

Zur Lösung dieser Aufgabe hat ein Becken der eingangs erwähnten Art erfindungsgemäß das Merkmal des kennzeichnenden Teils des Patentanspruchs 1.

Dadurch befindet sich das Kernreaktorbrennelement beim Einsetzen in die Aufnahmevorrichtung stets auf gleicher Höhe mit der Aufnahmevorrichtung. Über der langgestreckten Aufnahmevorrichtung brauch sich deshalb nur noch die Sicherheitswasserhöhe zu befinden, wenn diese langgestreckte Aufnahmevorrichtung vertikal eingestellt ist.

Dies bedeutet, daß entweder die Wasserhöhe im Becken gegenüber dem bekannten Becken um etwa 1/3 niedriger sein kann oder daß bei gleicher Wasserhöhe wie im bekannten Becken z.B. ein den Boden des Beckens lückenlos überdeckendes Lagergestell für Kernreaktorbrennelemente angeordnet sein kann. Trotzdem ist für die über diesem Lagergestell angeordnete langgestreckte Aufnahmevorrichtung immer noch eine ausreichende Sicherheitswasserhöhe vorhanden, auch wenn die Aufnahmevorrichtung vertikal gestellt ist.

Die Patentansprüche 2 bis 4 sind auf vorteilhafte Ausbildungen des Beckens nach Patentanspruch 1 gerichtet. Diese vorteilhaften Ausbildungen erleichtern die Bedienung der langgestreckten Aufnahmevorrichtung.

Die Erfindung und ihre Vorteile seien anhand der Zeichnung an einem Ausführungsbeispiel näher erläutert:

Figur 1 zeigt in perspektivischer Darstellung ein erfindungsgemäßes Becken mit einer langgestreckten Aufnahmevorrichtung für ein Kernreaktorbrennelement.

Figur 2 zeigt einen Längsschnitt durch die Beckenwand des Beckens nach Figur 1 mit einer Seitenansicht der Aufnahmevorrichtung für das Kernreaktorbrennelement.

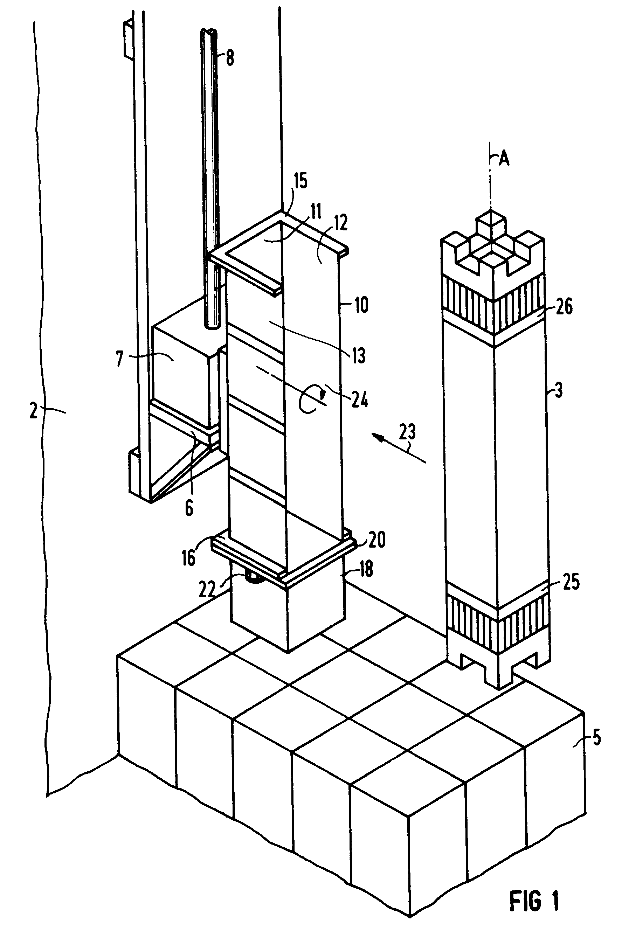

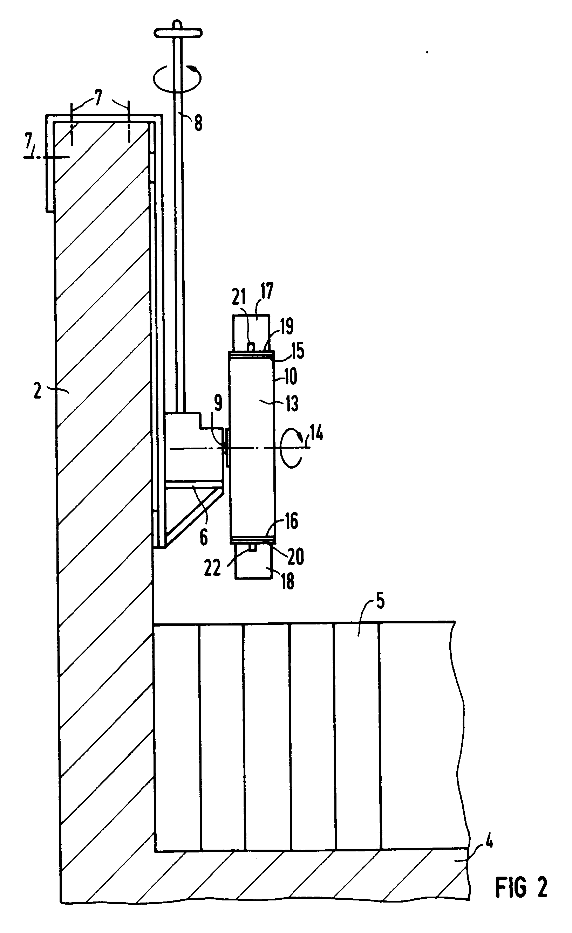

In den Figuren 1 und 2 ist die Wand 2 eines Beckens für langgestreckte Kernreaktorbrennelemente 3 mit einem Boden 4 dieses Beckens erkennnbar. Auf dem Boden 4 ist im Becken ein Lagergestell 5 für langgestreckte Kernreaktorbrennelemente 3 angeordnet, das diesen Boden 4 lückenlos überdeckt.

Ein solches langgestrecktes Kernreaktorbrennelement weist einen Brennelementkopf und einen Brennelementfuß auf, die beide durch eine relativ kleine Anzahl Haltestäbe starr miteinander verbunden sind. Zwischen Brennelementkopf und Brennelementfuß befinden sich Kernbrennstoff enthaltende Brennstäbe, von denen jeder in einer Masche von gitterförmigen Abstandhaltern kraftschlüssig gehaltert ist. Die gitterförmigen Abstandhalter sind ihrerseits formschlüssig an den Haltestäben gehaltert, von denen jeder durch eine Masche jedes gitterförmigen Abstandhalters geführt ist.

Eine Konsole 6 hängt an der Krone der Wand 2 des Beckens, wo sie die Wand 2 hintergreift und wo sie verspannt oder mit Schrauben 7 an der Wand 2 festgeschraubt ist. Auf dieser Konsole 6 befindet sich über dem Lagergestell 5 ein Schwenkgetriebe 7 mit einer zur Krone der Beckenwand 2 geführten vertikalen Antriebswelle 8.

Eine Abtriebswelle 9 des Schwenkgetriebes 7 ist horizontal gerichtet und steht rechtwinklig zur Wand 2 des Beckens, an der die Konsole 6 hängt. An dieser Abtriebswelle 9 ist als langgestreckte Aufnahmevorrichtung für ein Kernreaktorbrennelement 3 ein langgestrecktes U-Profil 10 aus Blech angeordnet. Die flache Grundseite 11 und die zu dieser Grundseite 11 rechtwinkligen flachen Seiten 12 und 13 des U-Profils 10 haben gleiche Breite und gleiche Länge. Die zugleich die Drehachse 14 der Abtriebswelle 9 darstellende Mittelachse dieser Abtriebswelle 9 steht rechtwinklig zur Grundseite 11 des U-Profils 10 und geht durch den Diagonalenschnittpunkt dieser rechteckigen Grundseite 11.

An den beiden offenen Enden hat das U-Profil 10 aus Blech sowohl an der Grundseite 11 als auch an den Seiten 12 und 13 je einen Außenflansch 15 und 16.

Das U-Profil 10 bildet einen Behälter für das langgestreckte Kernreaktorbrennelement 3. Dieser Behälter hat zwei offene Enden, und an jedem offenen Ende kann eine becherartige Verschlußkappe (18) bzw. 17 mit dem Innenraum des Behälters zugewandtem Kappeninnenraum lösbar befestigt werden. Diese Verschlußkappen 17 und 18 sind quaderförmig aus Blech ausgeführt. Die Öffnungen der Verschlußkappen 17 und 18 haben deckungsgleichen Querschnitt mit den offenen Enden des durch das U-Profil aus Blech gebildeten Behälters. Ferner weisen die Verschlußkappen 17 und 18 an der Kappenöffnung an allen vier Seiten einen Außenflansch 19 bzw. 20 auf. Der Außenflansch 19 der Verschlußkappe 17 ist mit Schrauben 21 am Außenflansch 15 des den Behälter für das Kernreaktorbrennelement 3 bildenden U-Profils 10 und der Außenflansch 20 der Verschlußkappe 18 mit Schrauben 22 am Außenflansch 16 des U-Profils 10 festgeschraubt.

In Figur 1 ist das U-Profil 10 mit vertikaler Längsachse angeordnet. An seinem Unterende ist es mit der Verschlußkappe 18 verschlossen. Ein langgestrecktes Kernreaktorbrennelement 3, das in Richtung seiner Längsachse A unter Wasser mit einem Kran aus dem Lagergestell 5 am Boden des Beckens herausgezogen wurde, wird mit diesem Kran in Richtung des Pfeils 23 quer zur Längsachse A des Kernreaktorbrennelements 3 durch die gegenüber der Grundseite 11 des U-Profils 10 zwischen dessen Seiten 12 und 13 befindliche langgestreckte Einsetzöffnung 24 des durch das U-Profil 10 gebildeten langgestreckten Behälters eingesetzt. Hierauf wird das Kernreaktorbrennelement 3 in Richtung seiner Längsachse A innerhalb des U-Profils 10 in die Verschlußkappe 18 am Unterende des U-Profils 10 abgesenkt und innen auf diese Verschlußkappe 18 aufgesetzt. Die Öffnung der Verschlußkappe 18 mit dem Außenflansch 20 schließt vorteilhafterweise mit dem Außensteg eines gitterförmigen Abstandhalters 25 des Kernreaktorbrennelements 3 ab.

Hierauf wird die Verschlußkappe 17 über das Oberende des Kernreaktorbrennelements 3 im U-Profil 10 gestülpt, auf den Außenflansch 15 am Oberende dieses U-Profils 10 aufgesetzt und mit den Schrauben 21 mit diesem Außenflansch 15 verschraubt. Die Öffnung dieser Verschlußkappe 17 mit dem Außenflansch 19 schließt vorteilhafterweise mit dem Außensteg eines gitterförmigen Abstandhalters 26 am Oberende des Kernreaktorbrennelements 3 ab.

Sodann wird die Antriebswelle 8 des Schwenkgetriebes 7 betätigt, und der aus dem U-Profil 10 bestehende, mit den Verschlußkappen 17 und 18 versehene Behälter mit dem in ihm befindlichen Kernreaktorbrennelement 3 wird um die Längsachse dieses Behälters und die Längsachse A des Kernreaktorbrennelements 3 rechtwinklige Drehachse 14 um 180° geschwenkt, so daß sich die ursprünglich am Unterende des langgestreckten Behälters befindliche Verschlußkappe 18 jetzt am Oberende dieses Behälters und die ursprünglich am Oberende befindliche Verschlußkappe 17 jetzt am Unterende befindet. Auf dieser Verschlußkappe 17 steht jetzt das langgestreckte Kernreaktorbrennelement 3 auf.

Schließlich werden die Schrauben 22 der Verschlußkappe 18 vom Außenflansch 16 am U-Profil 10 mit einem Werkzeug gelöst und die Verschlußkappe 18 in Richtung der Längsachse des U-Profils 10 vom Kernreaktorbrennelement 3 abgehoben. Dieses Kernreaktorbrennelement 3, dessen ursprüngliches Unterende jetzt das Oberende und umgekehrt ist, wird sodann mit dem Kran aus der Verschlußkappe 17 am Unterende des U-Profils 10 in Richtung der Längsachse A des Kernreaktorbrennelements 3 herausgehoben, bis dieses Kernreaktorbrennelement 3 quer zu seiner Längsachse A durch die Einsetzöffnung 24 des U-Profils 10 entgegen der Richtung des Pfeils 23 herausbewegt werden kann. Schließlich kann dieses Kernreaktorbrennelement 3 mit dem ursprünglichen Unterende als Oberende und dem ursprünglichen Oberende als Unterende beispielsweise in Richtung der Längsachse A des Kernreaktorbrennelements 3 wieder in das Lagergestell 5 am Boden 4 des Beckens eingesetzt werden.

Anstatt mit einer Verschlußkappe kann das U-Profil 10 an einem offenen Ende oder an beiden offenen Enden auch mit einer Endplatte verschlossen sein, die das betreffende offene Ende überdeckt und die z.B. mit Schrauben an dem Außenflansch 15 bzw. 16 lösbar befestigt ist. Günstigerweise ist in der Nähe eines mit einer Endplatte verschlossenen Endes eine die seitliche Einsetzöffnung 24 überdeckende, dieser Endplatte zugeordnete Seitenplatte ebenfalls z.B. mit Schrauben an den Seiten 12 und 13 des U-Profils 10 lösbar befestigt. Eine solche Seitenplatte schließt vorteilhafterweise mit dem Außensteg eines der beiden gitterförmigen Abstandhalter 25 oder 26 des Kernreaktorbrennelementes 3 ab.

Zum Einsetzen des Kernreaktorbrennelementes 3 in den durch das U-Profil 10 gebildeten Behälter bzw. zum Entnehmen des Kernreaktorbrennelementes 3 sind nicht nur die betreffende Endplatte vom U-Profil 10 abzunehmen, sondern auch alle Seitenplatten.

## Patentansprüche

1. Becken für langgestreckte Kernreaktorbrennelemente (3) mit einer Einrichtung zum Drehen eines langgestreckten Kernreaktorbrennelements mit einer langgestreckten Aufnahmevorrichtung (10) für das Kernreaktorbrennelement (3), die um eine Drehachse quer zur Längsachse dieser Aufnahmevorrichtung drehbar ist,
**dadurch gekennzeichnet,**
daß das Kernreaktorbrennelement (3) in Richtung quer zu seiner Längsachse (A) in die Aufnahmevorrichtung (10) einsetzbar und aus dieser Aufnahmevorrichtung (10) entnehmbar ist.

2. Becken nach Anspruch 1,
**dadurch gekennzeichnet,** daß die langgestreckte Aufnahmevorrichtung (10) ein Behälter mit einer seitlich angeordneten Einsetzöffnung (24) für das Kernreaktorbrennelement (3) ist.

3. Becken nach Anspruch 2,
**dadurch gekennzeichnet,** daß sich die seitlich angeordnete Einsetzöffnung (24) in Längsrichtung des Behälters (10) von einem offenen Ende des Behälters bis zum anderen offenen Ende erstreckt und
daß an mindestens einem dieser beiden offenen Enden eine becherartige Verschlußkappe (17; 18) mit dem Innenraum des Behälters zugewandtem Kappeninnenraum lösbar befestigt ist.

4. Becken nach Anspruch 2,
**dadurch gekennzeichnet,** daß sich die seitlich angeordnete Einsetzöffnung (24) in Längsrichtung des Behälters (10) von einem offenen Ende des Behälters bis zum anderen offenen Ende erstreckt,
daß an mindestens einem den beiden offenen Enden eine dieses offene Ende des Behälters überdeckende Endplatte lösbar befestigt ist und
daß am Behälter mindestens eine die seitliche Einsetzöffnung (24) überdeckende Seitenplatte lösbar befestigt ist.

## Claims

1. Pool for elongated nuclear reactor fuel elements (3) having a device for rotating an elongated nuclear reactor fuel element having an elongated device (10) for receiving the nuclear reactor fuel element (3), which device can be rotated around an axis of rotation transversely in relation to the longitudinal axis of the receiving device, **characterised in that** the nuclear reactor fuel element (3) can be inserted in the receiving device (10) and can be removed from this receiving device (10) in the transverse direction in relation to its longitudinal axis (A).

2. Pool according to claim 1, **characterised in that** the elongated receiving device (10) is a container having a laterally arranged insertion aperture (24) for the nuclear reactor fuel element (3).

3. Pool according to claim 2, **characterised in that** the laterally arranged insertion aperture (24) extends in the longitudinal direction of the container (10) from one open end of the container to the other open end, and in that a beaker-shaped locking cap (17; 18) is detachably secured to at least one of these two open ends by the internal space of the cap, which space faces towards the internal space of the container.

4. Pool according to claim 2, **characterised in that** the laterally arranged insertion aperture (24) extends in the longitudinal direction of the container (10) from one open end of the container to the other open end, and in that there is detachably secured to at least one of the two open ends an end plate covering this open end of the container, and in that at least one side plate covering the lateral insertion aperture (24) is detachably secured to the container.

## Revendications

1. Bassin destiné à un assemblage (3) combustible de réacteur nucléaire oblong, comportant un dispositif pour faire tourner un assemblage combustible de réacteur nucléaire oblong, comportant un dispositif (10) de réception oblong de l'assemblage (3) combustible de réacteur nucléaire qui peut être tourné par rapport à un axe de rotation, transversalement à l'axe longitudinal de ce dispositif de réception, caractérisé en ce que l'assemblage (3) combustible de réacteur nucléaire peut être introduit dans le dispositif (10) de réception et en être retiré transversalement à son axe (A) longitudinal.

2. Bassin suivant la revendication 1, caractérisé en ce que le dispositif (10) de réception oblong est un réceptacle ayant une ouverture (24) d'introduction de l'assemblage (3) combustible de réacteur nucléaire ménagée latéralement.

3. Bassin suivant la revendication 2, caractérisé en ce que l'ouverture (24) d'introduction ménagée latéralement s'étend dans la direction du réceptacle (10), d'une extrémité ouverte du réceptacle jusqu'à l'autre extrémité ouverte, et en ce qu'il est fixé de manière amovible, au moins à une de ces deux extrémités ouvertes, un capuchon (17; 18) de fermeture en forme de becher dont l'intérieur de capuchon est tourné vers l'intérieur du réceptacle.

4. Bassin suivant la revendication 2, caractérisé en ce que l'ouverture (24) d'introduction ménagée latéralement s'étend dans la direction longitudinale du réceptacle (10), d'une extrémité ouverte du réceptacle jusqu'à l'autre extrémité ouverte, en ce qu'il est fixé de manière amovible, au moins à une des deux extrémités ouvertes, un plaque d'extrémité recouvrant cette extrémité ouverte du réceptacle, et en ce qu'il est fixé de manière amovible au réceptacle au moins une plaque latérale recouvrant l'ouverture (24) d'introduction latérale.
